# EUROPEAN PATENT APPLICATION

(11) **EP 1 217 542 A1**
(43) Date of publication of application: **26.06.2002**
(21) Application number: 00403630.7
(22) Date of filing: 21.12.2000
(51) Int. Cl.: G06F 17/30

(54) **Communication system, communication unit and method for personalising communication services**

(71) Applicant: MOTOROLA, INC., Schaumburg, IL 60196 (US)
(72) Inventor: Benazera, Emmanuel, 75015 Paris (FR); Burg, Emmanuel, 75015 Paris (FR)
(74) Representative: Litchfield, Laura Marie

(57) **Abstract**

A communication system (100), comprising a plurality of communication units, at least one communication unit (104, 602) able to access information from an information source in the communication system (100) or the communication unit (104, 602), wherein the information is collated for the at least one communication unit (104, 602) dependent upon the user's personal environment.

A communication unit, a service discovery engine, a method for personalising a communication service and a computer readable medium are also provided.

This provides at least an advantage that the personal environment of the user is represented by ontologies of the domains he is interested in, thereby bringing modularity of the user environment, as new onlology domains can be downloaded to cover the space of interest of the user. Furthermore, it brings homogeneity of the representation since standard ontologies are under design or de-facto use.

## Description

### Field of the Invention

This invention relates to personalising a communication unit and, in particular, representing, storing and learning user preferences when the communication unit is connected to an information source, such as the internet. The invention is applicable to, but not limited to, a distributed communication environment where benefits can be gained from placing more user preference control in the communication unit, as compared to in the communication infrastructure.

### Background of the Invention

Present day communication systems attempt to offer the communication system user ever more features and services. In particular, in the mobile communication marketplace, it is desirable to provide the mobile user with access to as much information as the user would possibly want whilst being on the move, for example by enabling access to the plethora of internet, services, applications and information.

In the field of this invention, namely accessing information sources, it is known that a "bookmark" allows a user to connect quickly to say, a set of services, by memorising a particular address of a service or set of services. Bookmarks, as such, are widely used and offer advantages of ease and speed in accessing a multitude of information without the need for the user to remember all the relevant address details.

However, the more information that becomes available, the more a user increases his/her use of bookmarks. Hence, any benefit in not needing to remember a particular address or set of addresses to retrieve a piece of information is substantially reduced, due to the user needing to increasingly remember bookmark information or service provided by each particular bookmark. Basically, the problem with bookmarks is that they are not intuitive.

A further problem associated with bookmarks is that they are not updated automatically. Consequently, Bookmarks become obsolete over time, either because the services disappear, or change their address, or because new, superior services appear.

In the field of this invention, it is also known that "Cookies" are widely used. Cookies are set by services provided on a communication unit user's machine in order to recall his/her preferences.

A problem associated with cookies is that there is unfortunately no global ontology defined at the associated web-site. Furthermore, cookies are known to expand in an exponential manner. As a result, user's computers are becoming populated by legions of these cookies, many of which cannot be used for the user's benefit, such as generalisation, learning of contextual environment and/or masking the heterogeneity of services.

In the field of this invention, it is also known that "Portals" are used. Portals provide an environment for accessing and classifying the services or pages of a certain theme. They represent the commercial interests of the subscribing services.

For portals it is well known that the answers they provide are ordered according to commercial pressure. As a consequence users may not trust the answers implicitly and may have to sort out the answers provided by portals to fit them to their needs.

A number of leading communication companies are working in the SyncML data synchronisation standard (see www.syncml.org) that will manage email, address lists and files across different services and operating systems. SyncML is the common language for synchronizing all devices and applications over any network. SyncML leverages Extensible Markup Language (XML), making SyncML a truly future-proof platform. With SyncML, networked information can be synchronised with any mobile device, and mobile information can be synchronized with any networked applications

However, SyncML does not include proactive mechanisms using the context to provide pertinent information to the user.

Furthermore, as can be seen from the above summaries, the present mechanisms for providing a user with ease and speed of access to any information he/she wishes, suffers from a number of problems. The primary issue, as recognised by the inventors of the present invention, that has failed to be addressed in any of the previous mechanisms, is the pertinence of the representation of the user environment.

Bookmarks represent a simplified access mechanism, whereas Cookies are proprietary technology to customise a proprietary service to the user. In contrast, Portals do represent, to a small degree, the environment of the user. However the information provided by the Portal is kept implicit and inside the portal. As such, it cannot be accessed by the user for the very reason that it represents the added value of the particular Portal owner.

The SyncML initiative is a first effort towards an explicit description of an environment, but for the moment the emphasis in the standard's process is heavily weighted towards data representation and exchange between agenda, phone books, spreadsheets, etc.

In addition to the above mentioned pertinence of user environment the inventors of the present invention have recognised deficiencies in the prior art. A significant deficiency was recognised with the lack of collaboration, particularly information sharing, automatic updating, and dynamically distributing data and algorithms, between mobile terminals and fixed infrastructure in order to balance the workload between them.

Thus there exists a need in the field of this invention to provide communication system, communication unit and method for personalising communication services wherein the abovementioned disadvantages may be alleviated.

### Statement of Invention

In accordance with the present invention there is provided a communication system, as claimed in claim 1.

In accordance with the present invention there is provided a communication unit, as claimed in claim 13.

In accordance with the present invention there is provided a service discovery search engine, as claimed in claim 14.

In accordance with the present invention there is provided a computer program element, as claimed in claim 16.

In accordance with the present invention there is provided a method for personalising a communication service, as claimed in claim 18.

In accordance with the present invention there is provided computer program element, as claimed in claim 21.

### Brief Description of the Drawings

A communication system, communication unit and method for personalising communication services incorporating the present invention will now be described, by way of example only, with reference to the accompanying drawings, in which:
FIG. 1 shows an overview of a communication system that can be adapted to use the inventive concepts of the present invention.
FIG. 2 shows a tree representation of a user ontology, in accordance with a preferred embodiment of the invention.
FIG. 3 shows a tree representation of a context, in accordance with a preferred embodiment of the invention.
FIG. 4 shows a flowchart of a communication unit learning process, in accordance with a preferred embodiment of the invention.
FIG. 5 shows a tree representation of a user ontology and a tree representation context when applied to the communication unit learning process of FIG. 4, in accordance with a preferred embodiment of the invention.
FIG. 6 shows a flowchart of a service discovery process, in accordance with a preferred embodiment of the invention.
FIG. 7 shows a tree representation of a user ontology of FIG. 2, when applied to the service discovery process of FIG. 6, in accordance with a preferred embodiment of the invention.
FIG. 8 shows a tree representation of a personal environment, as improved by a Machine Learning (ML) process, in accordance with a preferred embodiment of the invention.

### Description of Preferred Embodiments

In summary, the present invention relates to defining a personal environment of a communication unit and, in particular, representing, storing and learning user preferences for connecting the communication unit to an information source such as the internet. Such a personal environment has been designed to be accessible to the user. Furthermore, it has been designed to work in a distributed manner, having a low operational impact on the communication unit, preferably a mobile communication unit, and delegating the heavy operational impact of user preference management to the communication infrastructure.

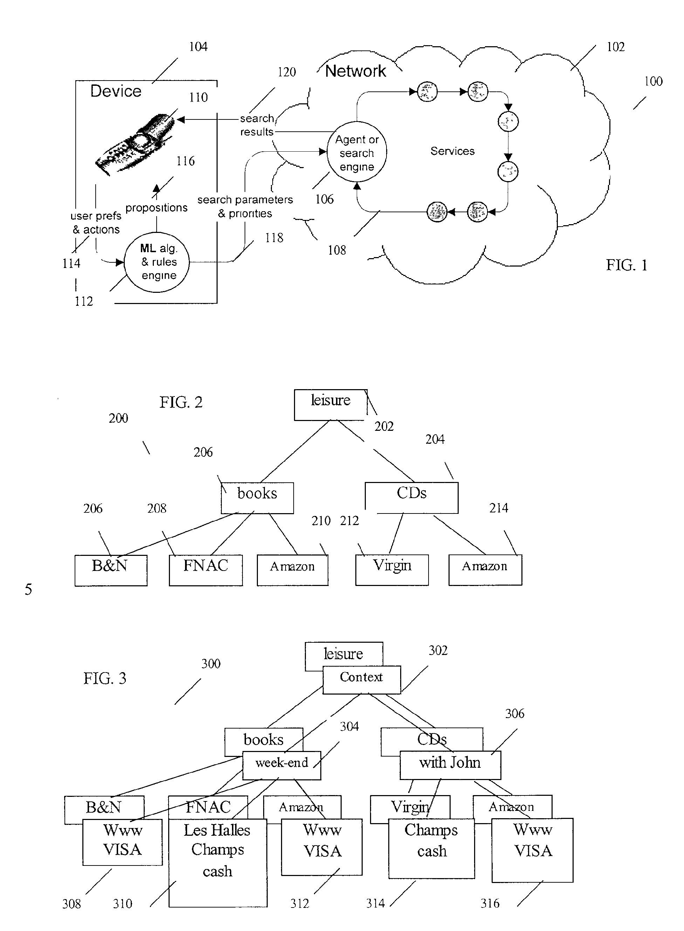

Referring first to FIG. 1, an overview of a communication system 100 is shown that can be adapted to use the inventive concepts of the present invention. The communication system 100 includes a communication infrastructure/network 102 coupled to a communication unit 104.

It is within the contemplation of the invention that the communication unit may be coupled to any number of external networks. Furthermore, the coupling mechanism can be by any suitable means, such as wire-line, wireless, infra-red, electro-magnetic etc.

The communication infrastructure/network 102 includes a mobile agent or search engine 106 that can search a number of services within the communication infrastructure/network 102, for example the internet.

The communication unit 104 includes a processor 110 to control the functionality and operation of the communication unit 104. The processor 110 is operably coupled to a machine learning algorithm function and/or rules engine 112 that receives user preference and action information 114 from the processor 110. The machine learning algorithm function and/or rules engine 112 also provides the processor 110 with propositions that result from the rules engine.

In the preferred embodiment of the invention, the machine learning algorithm and/or rules engine (ML) 112 monitor both user-requests for information/service(s) and the context of such requests. Based on such user requests, new user preference rules can be generated that incorporate the behaviour of the user.

In operation, when the user asks for new services, the ML algorithm 112 applies the learned rules that are appropriate to the current user context, and proposes solutions 116 (information, services) to the user. If there are no solutions for that particular user request and context, and therefore no solutions that are proposed by the ML 112, the search parameters and the context are transmitted 118 to the infrastructure 102. The infrastructure 102 uses a search engine 106 to access the information or results desired by the user of the communication unit 104. This information or results 120, once found, is/are transmitted to the communication unit 104 and included in the context representation of the user within the communication infrastructure 102.

Hence, the present invention aims to provide at least the following:
(i) a personal environment for a communication unit/communication user, where the personal environment include the representation and storage of user context information;
(ii) a learning algorithm that acquires, in a real-time manner, new preferences within the communication unit, and encodes them into a set of rules. A rules-based search engine then makes deductions of the communication unit user's requirements based on these rules. If a valid answer to the search is not found within an information database in the communication unit, the rule-based search engine collaborates with a search engine in the infrastructure to obtain the desired information/service(s);
(iii) a service discovery search engine that looks for information in the infrastructure network(s) and transmits the information/results to the communication unit, once located, where the infrastructure and communication unit merges the information/results with the user context in updating the personal environment rules; and
(iv) a deployment scheme permitting distribution of data and/or algorithm(s) between the communication unit and the communication infrastructure, thereby optimising the workload as well as the data transfer between them.

Altogether the inventors have introduced a new dimension into the information/service discovery by linking it to the user's environment, and, in particular, a context awareness of the user, which the inventors believe is a key element in accessing future pertinent services.

In the preferred embodiment of the present invention, a representation of the user's personal environment is generated. The personal environment of the user is represented through ontologies of the domains he/she is interested in. To better explain the operation of such ontologies, they are preferably represented by tree structures, as shown in FIG. 2 and FIG. 3.

In particular, FIG. 2 below provides a representation of a leisure ontology 200. For this particular user, leisure 202 is primarily defined by books 206 and CDs 204. Each of the user's preferences directs the user to a location (for example a shop's web-site), where the user can purchase selected goods. As shown, the user's preferred locations to purchase books are "B&N" 206, "FNAC" 208 and "Amazon" 210, accessed through the leisure 202 and books 206 search path. The user's preferred locations to purchase CDs are shown as "Virgin" 212 and "Amazon" 214, accessed through the leisure 202 and CDs 204 search path.

As a further representation of the user-environment, a context of the user's request can be used, either independently or as an overlay (coupled) to the personal environment shown in FIG. 2.

In accordance with a preferred embodiment of the invention, a definition of a context is where information from the environment (location, available networks, etc.) can be regrouped such as a device configuration, for example, configurations of a screen such as contrast and brightness, and other user-preferred settings.

As such, a context 302 can be represented by annotation of an ontology tree 300, as shown in FIG. 3. Such context annotations specify, for example, that the user purchases books during the week-end 304, and CDs generally when he is with a friend named John 306. For each of the shops, the context would say, record at least the address of the shop visited, and the preferred mode of payment in either situation 308-316.

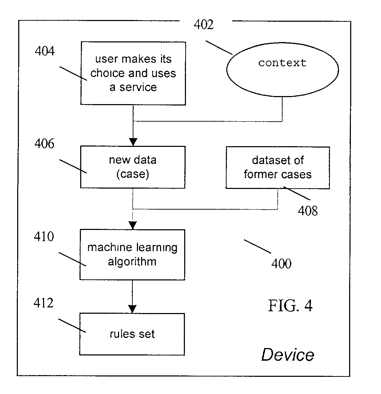

FIG. 4 shows a flowchart of a communication unit learning process 400 in accordance with a preferred embodiment of the invention. The learning algorithm acquires and refines preferences. The goal of the machine learning process is to increase the knowledge of the context of the user. The principle consists of observing the user during a learning phase and refining the user-environment representation by noting the service(s) the user accesses in a given context.

In particular, during the learning phase, the process acquires two dimensions:
. (i) knowledge of the context; and
. (ii) knowledge of the service(s) ontology.

In FIG. 4, the learning process 400 begins as soon as possible after the user has selected a service and uses the service 404. A new 'case' 406 is created based on the user's selections 404 and the current context 402.

The new case 406 is added to the set of former cases 408. The combined set of cases 406 and 408 are then processed by the ML algorithm 410. The ML algorithm 410 returns a rule set 412 as a final result. During such a process, the ML algorithm 410 searches for the information or services that best address the user's request.

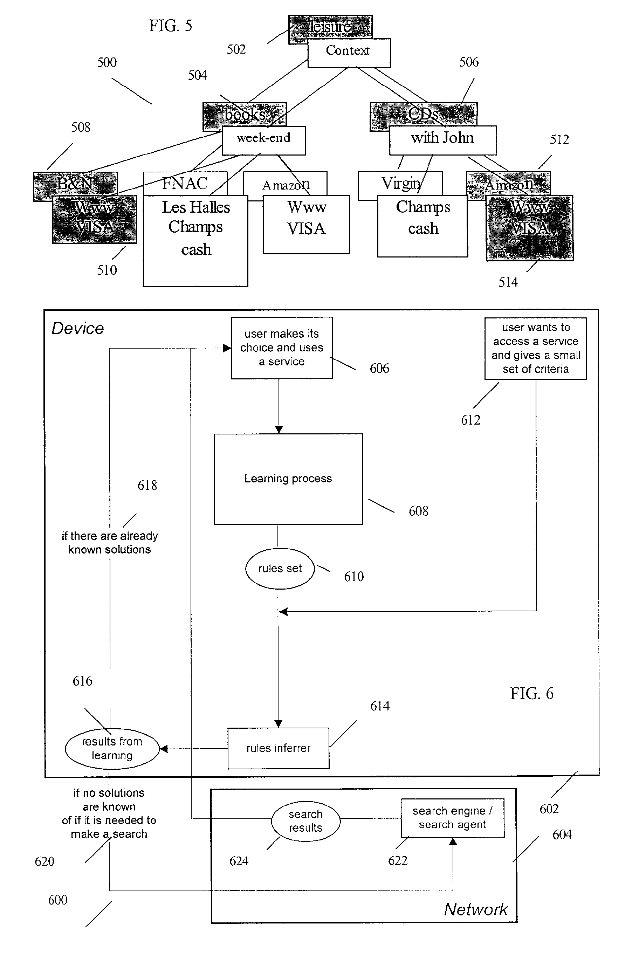

Referring now to FIG. 5, a tree representation of a user context 500, when applied to the tree representation of a user ontology of FIG. 3 in conjunction with the communication unit learning process of FIG. 4, is shown in accordance with a preferred embodiment of the invention. The example context provided is a learning case, again for a leisure environment 502, where the communication unit user is interested in purchasing two items: the first a book 504 at B&N 508, the second a CD 506 at Amazon 512. Both purchases are to be made using a credit card 510, 514.

The learning algorithm incorporates this new data into the dataset of user-cases and re-enforces the learning process, for example by attaching the following rule to the user preferences: "the user likes to purchase items such as books and CDs over the internet and pay by credit card".

The set of rules learned by the algorithm represent the way the user is able to select his/her preferred service(s) in a precise context, for example, "leisure". The set of rules offers optimal representation of data by discovering the most informative criteria for the search of services.

Each rule is preferably composed of a set of hierarchical conditions and their associated consequence, based on previous services chosen by the user. Conditions are preferably organised as a tree: a condition has to be satisfied before the next condition is evaluated. This machine learning algorithm is not processor-intensive and runs directly on the mobile device.

Once the service/information requested by the user has been determined, a process for finding the particular service is needed. In this regard, FIG. 6 shows a flowchart of a service discovery process in accordance with a preferred embodiment of the invention.

The service discovery process 600 commences when the user wants to access services. The interface of the user's communication unit allows the user to select one or more search criteria, as shown in step 612. In response, the communication unit runs the rule inferrer (RI) on the rules set, as in step 614.

The RI compares the request to the communication unit's stored rules conditions that currently equate to the context of the request, and, in response, provides a list of possible parameters and services, as shown in step 616. The inferred parameters and their associated service as consequence are termed a proposition. For each proposition that is inferred:
(i) If the service is already known, as in step 618, i.e. it has already been used once or it can be deduced from the context by applying the rules, the solution is immediately proposed to the user and the user can select the proposed service, as shown in step 606.
(ii) If the proposition is empty or if it is needed to make a search, as in step 620, the communication unit transmits the parameters of the proposition to the search engine (SE) in the communication infrastructure/network, as shown in step 622. The result of the search provides services that are added to the parameters to form new propositions, as in step 624. These propositions are added to the context tree and are displayed on the terminal's screen.

To further explain the benefits of the present invention, two example scenarios are described. The examples given here presuppose that the user has been using his/her communication unit for some time before the events take place. It is within the contemplation of the invention that when the communication unit is first sold to the user, the communication unit may already contain some typical user profiles.

### Example 1:

The communication unit user is on his way to his workplace and wishes to access the morning news on his communication unit. As he begins to select the news options on the service screen, the communication unit launches the rule inferrer and returns, for example, five possible propositions for news services in the current context of the user's request. The present invention is a substantial improvement over the bookmark solution, in that the system automatically classifies and organises the user selection(s) according to the context given.

### Example 2:

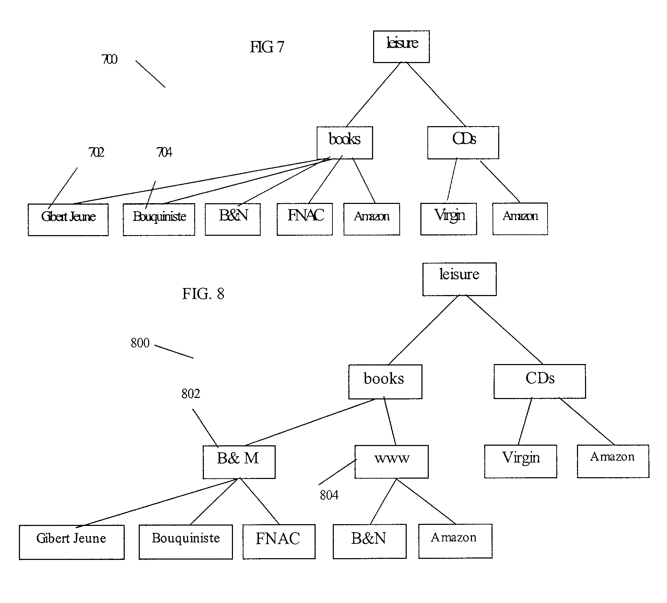

Referring now to FIG. 7, a tree representation of a user ontology of FIG. 2, when applied to the service discovery process of FIG. 6, is shown in accordance with a preferred embodiment of the invention. Let us assume that the user is not at her common working place and is now looking to purchase some books from one of her favourite shopping services. She would like to discover the local bookstores.

In accordance with a preferred embodiment of the invention, as shown in the tree ontology 700 shown in FIG. 7, two new services are added to the user context, to satisfy this additional request: Gibert Jeune 702 and Bouquiniste 704 - local bookstores. First, the rules are inferred on the communication unit to see if the desired service can be deduced.

As this environment is completely new to the user, the user context (for example, the rules for buying books) are transmitted to the search engine (SE) in the fixed communication infrastructure/network. The SE performs a search that complies with the user's incoming preferences on the networks it can access. The SE then returns the result to the communication unit. This example shows that the context of the user can also be enriched through searches in the communication infrastructure/networks.

However, it is within the contemplation of the invention that the use of tree learning algorithms may also modify the tree structure of the personal environment and/or the context. This development can be, for example, dependent upon the frequency of use.

Referring now to FIG. 8, a tree representation of a personal environment, as improved by a Machine Learning (ML) process, is shown in accordance with a preferred embodiment of the invention.

The books are split into two subsections, for Brick and Mortar shops 802 and www sites 804. This subdivision is then proposed to the user, and if she approves it, the ontology and the context are updated accordingly. This highlights the added value of the inventive concepts of the present invention to existing interfaces, as it integrates the service discovery into the user context and updates it according to use. This context is permanent and always available on the communication unit. Furthermore, it can be used with any service.

The control software for the present invention can, of course, be provided in a number of forms, including as a program stored on a CD-ROM (or the like) or as over-the-air download. By way of illustration only, the software required to operate either a communication unit or communication infrastructure is applied as a loadable computer program product.

It will be understood that the communication system, communication unit and method for personalising communication services described above provide at least the following advantages:

(i) A personal environment of a user may be represented through ontologies of the domains (s)he is interested in. This, in turn, provides the following advantages:
(a) brings modularity of the user environment, as new ontology domains can be downloaded to the user's communication unit to cover the areas of interest to the user;
(b) brings homogeneity of the user environment representation since standard ontologies are under design or de-facto use, for example, ontologies for books, weather, etc. that are distributed through commercial companies and standards. These ontology elements bring a structure and homogeneity between their users; and
(c) allows the use of partial results of services, for example subparts of the instantiated ontology, and combines them with others, as partial results are represented by partial instantiations of ontologies. This feature is highlighted in Example 2 and shown in FIG 7, where items 702 and 704 could be added to the existing ontology of books

This innovative representation of a modular and homogeneous environment is highly advantageous for future generation of services, where a mobile user will discover and add local service(s) to their personal environment. In Example 2, the user added local bookstores from Paris into his/her personal environment. As a consequence a mobile user can discover and add service(s) developed by several service providers and mask their differences through their integration into his/her environment.

A significant benefit to the user is to have a unique personal environment for all services and to have the full control of it. In addition, this environment is pro-active and can search for new services and classify them into the user environment, as illustrated by Example 1.

(ii) The ontologies may be represented by tree structures. This, in turn, provides the following advantages:
(a) allows commonly used graphical representation, with all the classical representation primitives;
(b) allows representation of arbitrary complex structures, as tree structures are developed according to the needs of the user;
(c) enables a compact representation of data in a memory element of the communication unit, which facilitates efficient data transmission; and
(d) allows a gradual evolution of the user's profile, through machine learning in a "gentle and controlled manner", for example, some nodes of the tree can be explored or enhanced to refine locally the profile of the user.

(iii) Tree learning algorithms may be used to continuously improve and enhance the service provision to the user, whilst requiring low data storage and reduced computational needs. This family of algorithms is well suited for small devices and scarce resources, as they have a low algorithmic complexity. In addition, trees are a compact representation of data and many techniques facilitate their compression in aiming to optimise the transmissions between the mobile terminal and the fixed infrastructure.

Thus, a communication system, a communication unit and a method for personalising communication services have been provided where the aforementioned disadvantages with prior art arrangements have been substantially alleviated.

## Claims

1. A communication system (100), comprising a plurality of communication units, at least one communication unit (104, 602) able to access information from an information source in the communication system (100) or the communication unit (104, 602), the communication system (100) **characterised in that** information is collated for the at least one communication unit (104, 602) dependent upon a user's personal environment.

2. The communication system according to claim 1, wherein the user's personal environment is represented through ontologies (200, 300, 500) of domains the user is interested in.

3. The communication system according to claim 2, wherein the ontologies (200, 300, 500) are represented by tree structures.

4. The communication system according to claim 1 or claim 2 or claim 3, wherein the user's personal environment is represented as a function of a context (402) of a user's request.

5. The communication system according to claim 4, wherein the context regroups the information from at least one of:
(i) the user's personal environment;
(ii) a configuration of the at least one communication unit (104, 602); and
(iii) parameters a user selects when looking a for a service.

6. The communication system according to claim 5, wherein the user's personal environment includes at least one of: location, available networks.

7. The communication system according to claim 5, wherein the at least one communication unit (104, 602) configuration includes at least one of: screen configuration as contrast, brightness, other customisation.

8. The communication system according to any one of preceding claims, wherein the communication system or the at least one communication unit (104, 602) further comprises a processor incorporating a learning algorithm (112, 410) for acquiring and/or refining preferences of the at least one communication unit (104, 602).

9. The communication system according to claim 8, wherein the learning algorithm (112, 410) includes noting services a user requests (404, 606) in a given context during a learning phase (608) and in response to said noted services refining the representation of the user's personal environment.

10. The communication system according to claim 9, wherein the learning phase (608) includes noting at least one of:
(i) precision of the context; and
(ii) precision on the services ontology.

11. The communication system according to claim 9 or claim 10, wherein a new rule is generated based on a communication unit user's requested services and a context of a request.

12. The communication system according to claim 11, wherein the new rule is added to a set of rules (610), processing a combined set of rules by the learning algorithm (112, 410) prior to returning information or a result to the user.

13. A communication unit adapted to operate in the communication system of any one of preceding claims 1 to 12.

14. A service discovery search engine (106, 622) for operation in a communication infrastructure (102, 604), the service discovery search engine **characterised by** a receiver receiving a search request in a particular context from a user, the means for receiving being operably coupled to means for searching for information in the communication infrastructure in response to said request, and a transmitter transmitting information/results (120, 624) obtained by the service discovery search engine (106, 622) to the communication unit (104, 602) operating on the communication system (100).

15. The service discovery search engine according to claim 14, wherein the communication infrastructure and communication unit merge the obtained information/results with at least one of the user context and the requested information, in order to update at least one personal environment rule.

16. A computer program element comprising computer program code to perform the service discovery search engine steps of any one of claims 14 or 15.

17. The computer program element of claim 16, embodied on a computer readable medium.

18. A method for personalising a communication service, wherein a user's personal environment is used in a provision of information or services to the user, the method comprising the steps of:
requesting (404, 606), by the user, access to an information or service;
processing a rule set (412, 610) associated with the user;
the method **characterised by** the steps of:
checking (614) the rule set conditions that are currently equal to the context; and
returning information or services (616, 624 to 606) in response to the user's request and the user's personal environment.

19. The method for personalising a communication service according to claim 18, wherein if no information or service can be obtained in response to the request in the particular context from the user's personal environment, the method further includes the step of transmitting (620), by the communication unit, the search request with the context to a search engine (622) in the communication infrastructure (604).

20. The method for personalising a communication service according to claim 18 or claim 19, wherein the results of the search are added to the information stored in the communication unit in relation to the request in the particular context.

21. A computer program element comprising computer program code to perform the steps of any one of claims 18 to 20.

22. The computer program element of claim 21, embodied on a computer readable medium.
